(19) Europäisches Patentamt

European Patent Office

Office européen des brevets

(11) Veröffentlichungsnummer : **0 483 501 B1**

(12) # EUROPÄISCHE PATENTSCHRIFT

(45) Veröffentlichungstag der Patentschrift :
**07.12.94 Patentblatt 94/49**

(51) Int. Cl.$^5$ : **G01C 19/72**

(21) Anmeldenummer : **91115838.4**

(22) Anmeldetag : **18.09.91**

(54) **Faseroptisches Sagnac-Interferometer zur Drehratenmessung.**

(30) Priorität : **31.10.90 DE 4034664**

(43) Veröffentlichungstag der Anmeldung :
**06.05.92 Patentblatt 92/19**

(45) Bekanntmachung des Hinweises auf die
Patenterteilung :
**07.12.94 Patentblatt 94/49**

(84) Benannte Vertragsstaaten :
**DE ES FR GB IT NL**

(56) Entgegenhaltungen :
**EP-A- 0 283 105**
**EP-A- 0 294 915**
**DE-A- 3 140 110**
**DE-A- 3 204 810**

(73) Patentinhaber : **LITEF GmbH**
**Lörracher Strasse 18**
**D-79115 Freiburg (DE)**

(72) Erfinder : **Gröllmann, Peter, Dipl.-Ing.**
**Feldbergstrasse 24L**
**W-7800 Freiburg (DE)**

(74) Vertreter : **TER MEER - MÜLLER -**
**STEINMEISTER & PARTNER**
**Mauerkircherstrasse 45**
**D-81679 München (DE)**

EP 0 483 501 B1

## Beschreibung

Die Erfindung betrifft ein faseroptisches Sagnac-Interferometer zur Drehratenmessung.

Zur Sensierung von Drehbewegungen eines Körpers, beispielsweise eines Flugkörpers im inertialen Raum, sind unter anderem faseroptische Sagnac-Interferometer, auch Faserkreisel oder kurz FOG (= Fibre Optic Gyro) genannt, in verschiedenen Konfigurationen und unterschiedlichen Signalauswerteprinzipien bekannt. Üblicherweise umfaßt der Aufbau eines solchen Faserkreisels einen mittels Lichtwellenleiter verwirklichten ringförmigen Lichtweg mit einem optischen Phasenmodulator an einem Ende, optische Koppler zur Einkopplung von Licht einer Lichtquelle in und zur Auskopplung drehrateninformationstragenden modulierten Lichts aus dem Lichtweg auf einen Photodetektor sowie eine elektronische Schaltungsanordnung zur Auswertung der Detektorsignale und zur Beaufschlagung des Phasenmodulators mit einem bestimmten Modulationssignal, mit dessen Beschaffenheit sich die nachfolgenden Ausführungen in erster Linie beschäftigen werden.

Die hier im Vordergrund des Interesses stehenden Ausführungsformen solcher Faserkreisel benutzen eine periodische Phasenschiebung am besagten Modulator, deren Periodendauer der doppelten Lichtlaufzeit im ringförmigen Lichtweg entspricht, sowie eine unmodulierte Lichtquelle konstanter Lichtleistung. Liegt eine Drehbewegung des ringförmigen Lichtwegs (des Rings) vor, so wird der Photodetektor mit einer modulierten Lichtintensität beaufschlagt, die einen Anteil mit der Frequenz des Modulationssignals enthält. Die Amplitude dieses Signals ist ein Maß für den Betrag der Drehrate, während die Phasenlage relativ zur Modulationsphasenlage eine Aussage über die Drehrichtung liefert. Durch geeignete Trägerfrequenzmodulationsverfahren, z. B. Synchrondemodulation mit der Modulationsfrequenz als Referenz, kann ein drehrichtungseindeutiges Signal mit im allgemeinen nichtlinearem Amplituden-Drehraten-Zusammenhang gewonnen werden.

Dieses sogenannte Auslesesignal kann entweder direkt als drehrateninformationstragendes Signal ausgewertet werden (Open-Loop-Verfahren) oder kann dazu dienen, über eine Regeleinrichtung den Phasenmodulator mit zusätzlichen Signalen zu versorgen, um so über eine zusätzliche optische Phasenverschiebung die Wirkung der drehbedingten Phasenverschiebung (Sagnac-Phase) im wesentlichen zu kompensieren. Diese zusätzliche Phasenverschiebung ist ebenfalls ein direktes Maß für die Drehrate (Closed-Loop-Verfahren). Das letztere Verfahren erfordert einen höheren technischen Aufwand bei den Signalverarbeitungseinrichtungen, liefert aber insbesondere für die in der Inertialtechnik geforderten Genauigkeiten von Drehratenmessungen über einen großen Dynamikbereich bessere Ergebnisse.

Zum Stand der Technik über diese sogenannten rückstellenden Sagnac-Interferometer (Closed-Loop-Verfahren) sei auf die US-PS 4 705 399 sowie auf die Druckschrift EP-A-0 294 915 verwiesen.

Gemäß der Lehre der erstgenannten US-Patentschrift wird die Phasenrückstellung am Phasenmodulator über eine rechteckförmige modulierte treppenförmige Phasenverschiebung mit Rücksprüngen von $2\pi$ Phasenhub erreicht. Die Sägezahnsteigung ist ein Maß für die Drehrate. Ein wesentlich verbessertes Verfahren, mit dem vor allem ein Unempfindlichkeitsbereich der Drehratensensoranordnung bei kleinen Drehraten verringert und eine Skalenfaktordrift verhindert wird, ist Gegenstand der EP-A- 436 052 (veröffentlicht am 10.07.91).

Beim Verfahren gemäß der zweitgenannten Druckschrift EP-A-0 294 915 werden die Photodetektorsignale nur zu bestimmten Zeiträumen ausgewertet, außerhalb derer diese Signale über einen elektronischen Schalter von der nachfolgenden Signalverarbeitungseinrichtung abgetrennt werden. Über Demodulationseinrichtungen wird ein Drehratensignal gewonnen, welches zur Steuerung der Amplitude und Phasenlage von Phasenmodulationssignalen dient, die zusätzlich zu den sonstigen Modulationssignalen dem Phasenmodulator zugeführt werden. Diese zusätzlichen Modulationssignale beinhalten nach Amplitude, Phasenlage, Betrag und Vorzeichen die rückstellwirksame optische Phasenverschiebung und sind somit gleichzeitig ein direktes Maß für die Drehrate. Gegenüber dem in der genannten US-Patentschrift beschriebenen sogenannten Phasenrampenrückstellverfahren ergibt sich der Vorteil, daß durch das periodische Auslesen des Photodetektors über den erwähnten Schalter das Rückstellsignal nicht rampenartig anzusteigen braucht, da eine einfacher zu erzeugende Rechteckschwingung ausreichend ist.

Ein großes technisches Problem bei Drehratensensoren der genannten Art ist bisher die ausreichend genaue Demodulation des Auslesesignals. Die entsprechenden Demodulatoren müssen einerseits, insbesondere für Open-Loop-Anordnungen, über einen sehr hohen Dynamikbereich, häufig größer als sechs Dekaden, verfügen und andererseits für Frequenzen von einigen 100 kHz ausgelegt sein. Dafür werden in der Regel schnelle Synchrondemodulatoren, aufgebaut aus FET-Schaltern, verwendet. Dabei treten jedoch Fehlerterme aufgrund von Ladungsträgerinjektion während der Umschaltprozesse, Offsetfehler aufgrund von eingestreuten Harmonischen des Kreiselmodulationssignals in den Eingang des Demodulators, durch Phasendifferenzen zwischen dem Modulationssignal und dem Referenzsignal des Demodulators und durch sogenannte Verlustmodulation auf. Außerdem werden sowohl schnelle als auch hochauflösende A/D-Wandler benötigt, die zumindest beim derzeitigen Stand der Technik noch nicht zur Verfügung stehen.

Um diesen Problemen bei der Demodulation des Kreisel-Auslesesignals zu begegnen, wurde mit der EP-A- 400 197 (veröffentlicht am 05.12.1990) ein Demodulationsverfahren vorgestellt, das sich die Erkenntnis zunutze macht, daß die aus anderen Gründen erforderlich hohe Kreiselbandbreite für das Kreiselauslesesignal oder Drehratensignal gar nicht benötigt wird. Durch eine geeignete Modulation der üblicherweise sehr breitbandigen Lichtquelle, d. h. durch impulsgesteuertes An- und Ausschalten der Lichtquelle, ist es möglich, das Auslesesignal in einen wesentlich niedrigeren Frequenzbereich zu transformieren. Obwohl der Phasenmodulator im Ring nach wie vor mit einem Modulationssignal mit einer Periodendauer von der doppelten Lichtlaufzeit im Ring moduliert wird, treten am Photodetektor wiederum drehrateninformationstragende Signale auf, deren Trägerfrequenz jedoch gegenüber den Verfahren nach dem erwähnten Stand der Technik erheblich niedriger liegt als die Phasenmodulatorfrequenz. Insbesondere für Faserkreisel neuerer Bauart mit kürzerer Faserlänge und entsprechend hoher Modulationsfrequenz ist die für das Auslesesignal erreichte Frequenzreduktion von entscheidender Bedeutung. In der EP-A- 400 197 wurde weiterhin vorgeschlagen, durch Tastung des Lichtsignals für bestimmte Zeitspannen nur jeweils einen bestimmten Phasenabschnitt des Auslesesignals zu bestimmen, und in Folge und zyklisch auf gleiche Weise weiter Phasenabschnitte zu bestimmen.

Der Erfindung liegt die Aufgabe zugrunde, Faserkreisel der in der EP-A- 400 197 beschriebenen Art weiter zu verbessern.

Diese Aufgabe wird gelöst durch ein faseroptisches Sagnac-Interferometer zur Drehratenmessung, bei dem

- ein von einer Lichtquelle ausgehender Lichtstrahl, über eine Faserstrecke geleitet, einen ersten Richtkoppler durchläuft, an dessen einem Ausgang ein Photodetektor für das Auslesesignal angeschlossen ist, und in einem zweiten Richtkoppler in zwei Teillichtstrahlen aufgespalten wird, die in entgegengesetzter Richtung in eine Faserspule eingestrahlt und durch einen Phasenmodulator periodisch mit einem Signal moduliert werden, dessen Periode geradzahligen Vielfachen der Laufzeit des Licht durch die Faserspule entspricht,
- ein Schaltsignalgenerator das Erregersignal der Lichtquelle periodisch so tastet, daß während einer ersten Zeitspanne, die einem ganzzahligen Vielfachen der Periode des Phasenmodulationssignals entspricht, nur ein bestimmter erster Phasenabschnitt des periodischen Ausgangssignals des Interferometers zur weiteren Verarbeitung durch eine Demodulations- und Auswerteschaltung auftritt,
- eine Logikschaltung den Schaltsignalgenerator so triggert, daß nach der ersten Zeitspanne während einer zweiten Zeitspanne oder gegebenenfalls während aufeinanderfolgender weiterer Zeitspannen, die jeweils einem ganzzahligen Vielfachen der Periode des Phasenmodulationssignals entsprechen, nur ein zweiter bzw. aufeinanderfolgend jeweils nur ein weiterer Phasenabschnitt des periodischen Auslesesignals des Interferometers auftritt, so daß nach einer der Anzahl der einzelnen erfaßten Phasenabschnitte entsprechenden Mehrzahl vor Tastfolgewechseln eine ganze, aus der Folge der erfaßten Phasenabschnitte zusammengesetzte Periode des Auslesesignals erfaßt ist und anschließend in analoger Weise fortlaufend weitere Perioden, deren Dauer entsprechend der Anzahl der Tastpulse pro Phasenabschnitt wesentlich länger ist als die Periode des Phasenmodulationssignals, und bei dem
- die Auslesesignale der durch den Tastvorgang erfaßten Phasenabschnitte synchron zu den Abtast-Zeitspannen demoduliert werden, wobei
- der Phasenmodulator durch einen Modulationssignalgenerator angesteuert wird, der
  -- eine die demodulierten Auslesesignale aufnehmende rückstellende Regeleinrichtung,
  -- einen vom Ausgangssignal der Regeleinrichtung beaufschlagten Signalgenerator, der eine mit der Frequenz des periodischen Modulationssignals synchronisiertes Rechtecksignal mit einer im Takte des Triggersignals der Logikschaltung um 180° wechselnden Rechteckphasenlage liefert, dessen Amplitude dem Ausgangssignal der Regeleinrichtung folgt und
  -- eine Summationseinrichtung umfaßt, die an einem ersten Eingang durch den Signalgeneratorausgang und an einem zweiten Eingang durch das Modulationssignal beaufschlagt ist, und daß
- der verstärkte Summenausgang der Summiereinrichtung den Phasenmodulator als drehratenkompensierendes Modulationssignal beaufschlagt.

Vorteilhafterweise wird in der Regeleinrichtung ein Proportional-Integral-Regler verwendet, der so einzustellen ist, daß die Amplitudensteuergröße für den Signalgenerator ein direktes Maß für die Drehrate ist, wobei über eine Schnittstelle die Drehrate auch direkt auslesbar ist.

Mittels einer geeigneten und weiter unten in beispielsweiser Ausführungsform näher beschriebenen Schaltungsergänzung ist außerdem eine Skalenfaktorkorrektur möglich.

Mit Bezug und teilweisem Rückgriff auf das in der genannten EP-A- 400 197 beschriebene Demodulationsverfahren mit gepulster Lichtquelle wird die Erfindung nachfolgend anhand eines Ausführungsbeispiels unter Bezug auf die Zeichnung näher erläutert. Es zeigen:

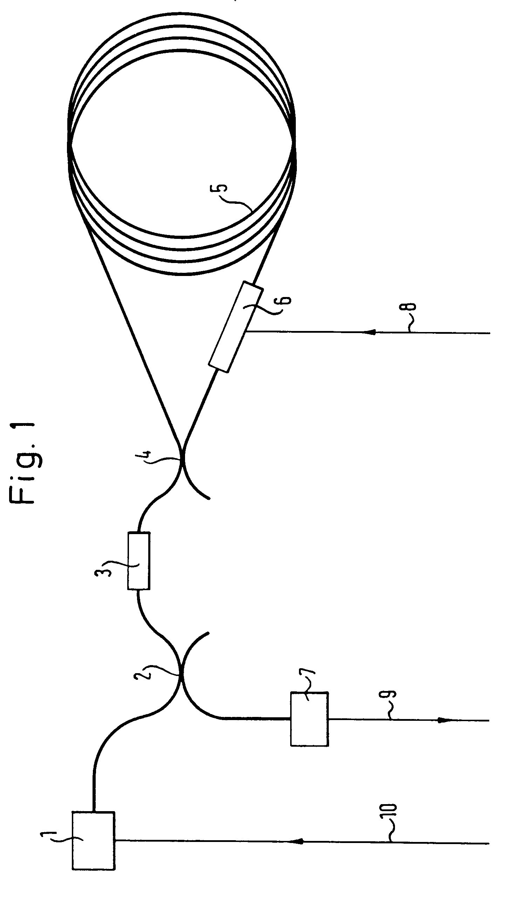

Fig. 1        den Prinzipaufbau eines Faserkreisels, im dargestellten Beispiel eines Sagnac-Interferometers;

| Fig. 2a bis 2h | Signalverläufe zur Erläuterung des den Ausgangspunkt der Erfindung bildenden Demodulationsverfahrens nach der EP-A- 400 197 an verschiedenen Punkten bzw. Abschnitten des Faserkreisels gemäß Fig. 1 einerseits bzw. einer Erreger- und Demodulatorschaltung gemäß Fig. 3 andererseits; |
| Fig. 3 | eine mit der EP-A- 400 197 vorgeschlagene Demodulatorschaltung mit zugeordneter Pulserregerschaltung für die Lichtquelle im Faserkreisel nach Fig. 1; |
| Fig. 4 | eine auch bereits in der EP-A- 400 197 vorgeschlagene, gegenüber der Schaltung nach Fig. 3 abgewandelte Ausführungsform für einen digitalen Modulator; |
| Fig. 5 | ein Ausführungsbeispiel einer erfindungsgemäße Ergänzung für ein faseroptisches Sagnac-Interferometer, das nach dem Demodulationsprinzip beispielsweise der Fig. 3 oder 4 ausgelegt ist; |
| Fig. 6 | der Fig. 2 entsprechende Signalverläufe bei Anwesenheit einer Drehrate und bei nicht vollständiger Sagnac-Phasenkompensation; |
| Fig. 7 | zeitkorrelierte Signalverläufe bei einer alternativen erfindungsgemäßen Realisierung einer Anordnung, die in Fig. 5 durch gestrichelte Schaltungsblöcke wiedergegeben ist; und |
| Fig. 8 | zeitkorrelierte Signalverläufe bei zusätzlicher Verwirklichung einer Skalenfaktorregelung, die beim Ausführungsbeispiel der Fig. 5 ebenfalls durch gestrichelt eingezeichnete Schaltungsblöcke realisiert ist. |

Um das Verständnis der Erfindung zu erleichtern, sei zunächst das Demodulationsverfahren gemäß der EP-A- 400 197 unter Bezug auf das in Fig. 1 dargestellte Interferometer in Verbindung mit den Fig. 2a bis 2h sowie unter Bezug auf die Fig. 3 und 4 erläutert.

Das Licht einer Lichtquelle 1 durchquert einen ersten Richtkoppler 2 und einen Polarisator 3 und wird dann in einem zweiten Richtkoppler 4 in zwei Teillichtstrahlen aufgespalten, die in entgegengesetzter Richtung eine Faserspule 5 durchlaufen. Beide Teillichtstrahlen werden zusätzlich einer Phasenmodulation in einem Phasenmodulator 6 unterworfen, der vorzugsweise an einem Ende der Faserspule angebracht ist. Der Phasenmodulator 6 wird mit einem Ansteuersignal 8 beaufschlagt, das zu einer im allgemeinen zeitabhängigen Phasenmodulation in der Interferometeranordnung führt. Als Folge der Modulation und der sich durch eine inertiale Drehrate $\Omega$ ergebenden Sagnacphase $\Phi_s$ wird an einem am Richtkoppler 2 angeschlossenen Photodetektor 7 ein Auslesesignal I(t) auf einem Auslesekanal 9 erhalten. Der Strom i(t) zum Betrieb der Lichtquelle 1 wird über eine Leitung 10 zugeführt.

In guter Näherung ergibt sich für die Transferfunktion des Interferometerkreisels:

$$I(t) = I_0 (1 + \cos(\Phi_s + \Phi(t) - \Phi(t - \tau))) \quad (1)$$

mit der Sagnac-Phase

$$\Phi_s = \frac{4\pi.L.R}{\lambda.c} . \Omega \quad (2)$$

worin mit $I_0$ eine konstante Lichtintensität (konstante Lichtstärke durch konstanten Strompegel $i_0$ der Lichtquelle), mit $\tau$ die Laufzeit des Lichts durch die Faserspule 5, mit L die Länge der Faserspule 5, mit R der mittlere Radius der Faserspule 5, mit $\lambda$ die mittlere Wellenlänge des Lichts der Lichtquelle 1 und mit c die Lichtgeschwindigkeit im Vakuum bezeichnet sind.

Als Lichtquelle 1 eines Interferometerkreisels dient im allgemeinen entweder eine Laserdiode oder eine Superlumineszenzdiode (SLD). Beide Typen haben eine sehr hohe Bandbreite von mehr als 1 GHz. Es sind Applikationsschaltungen zur Diodenansteuerung mit mehreren 100 MHz Bandbreite bekannt. Das Ein- und Austasten der Lichtquelle 1 kann also über die Stromzuleitung 10 außerordentlich schnell erfolgen.

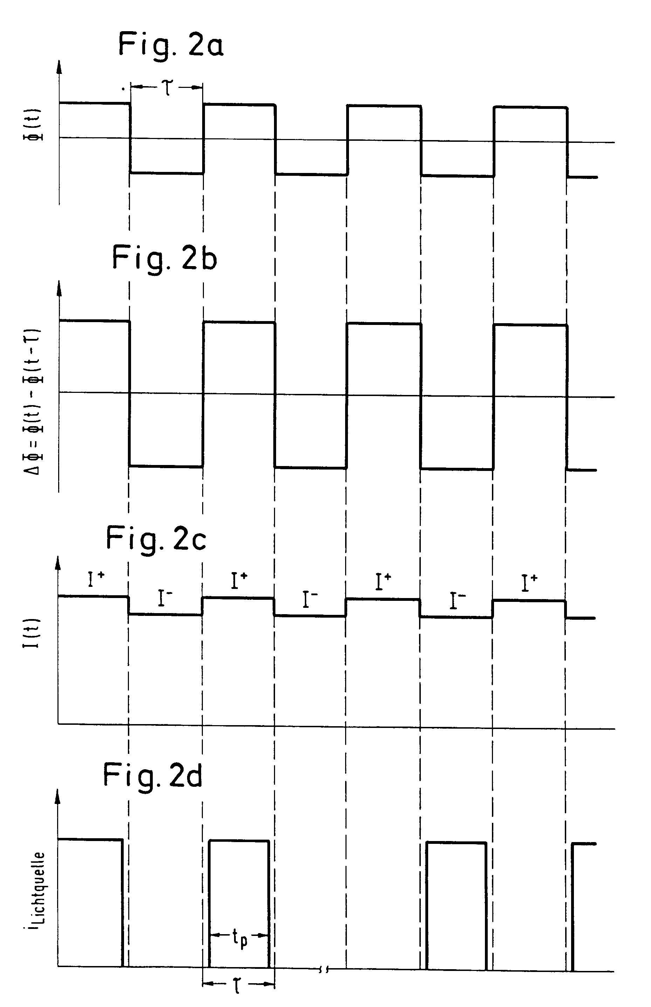

Die Fig. 2a veranschaulicht das Ansteuersignal des Phasenmodulators 6 bei Rechtecksignalansteuerung mit etwa der optimalen Frequenz f = 1/(2·$\tau$), d. h. einer Frequenz, bei der die Laufzeit des Lichts durch die Faserspule 5 der Hälfte der Periode der Modulationsfrequenz entspricht. Fig. 2b zeigt die Phasendifferenz $\Delta\phi$ im Kreisel, die sich als Folge einer derartigen Modulation ergibt. Fig. 2c veranschaulicht den zeitlichen Verlauf des Auslesesignals I(t) des Photodetektors 7 (Photodiode) bei Vorliegen einer Drehrate. Bei der synchronen Demodulation werden jeweils zwei aufeinanderfolgende Signale $I^+$ und $I^-$ miteinander verglichen und ihre Differenz wird als Phasendifferenz interpretiert. Dabei wird die Lichtquelle mit einem getasteten Signal i(t) für eine bestimmte Zeitspanne, die einem Vielfachen der Periode des Modulationssignals entspricht und beispielsweise eine Dauer von 100 $\mu$s bis 1 ms hat, im Wechsel so angesteuert, daß nur das Signal $I^+$ auftritt und dann für den gleichen Zeitraum nur das Signal $I^-$.

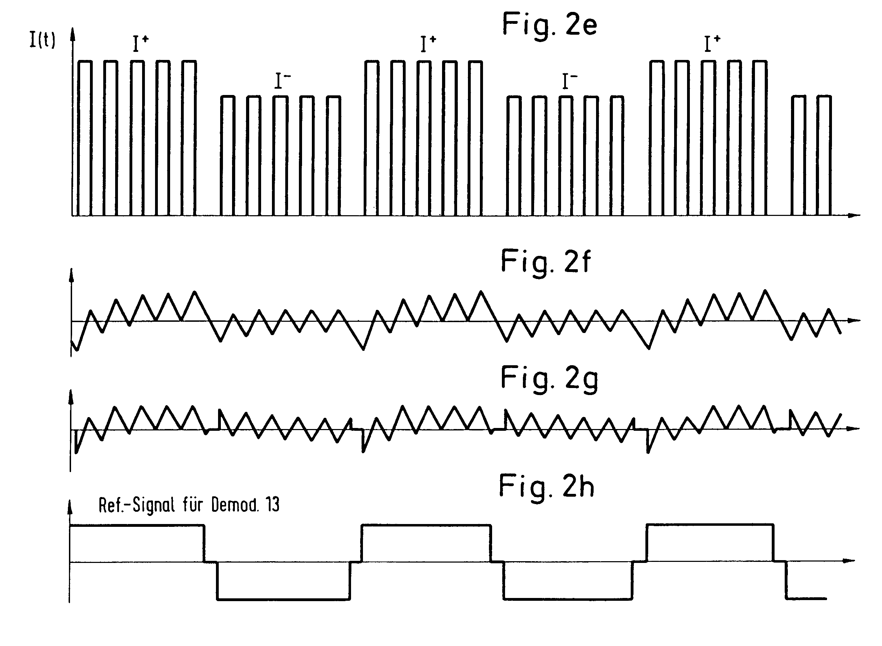

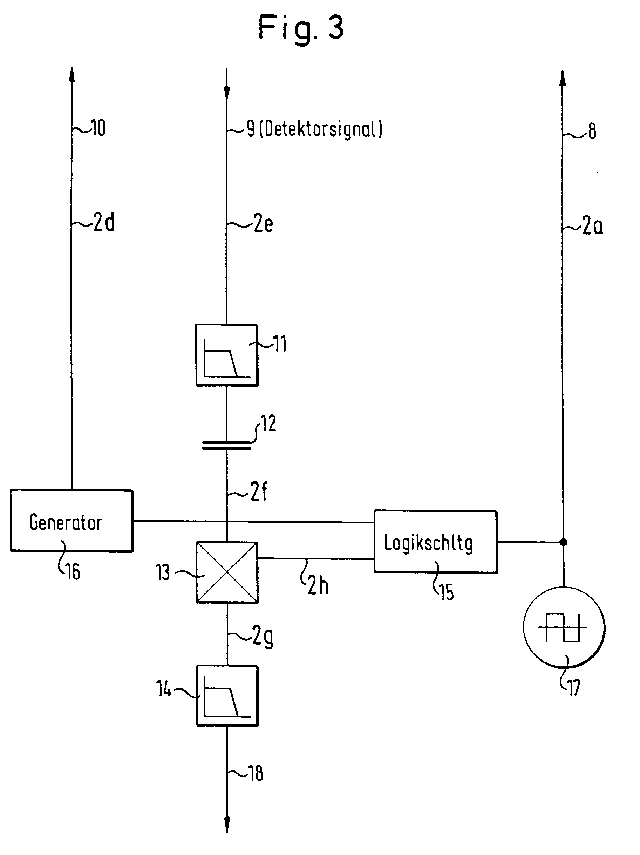

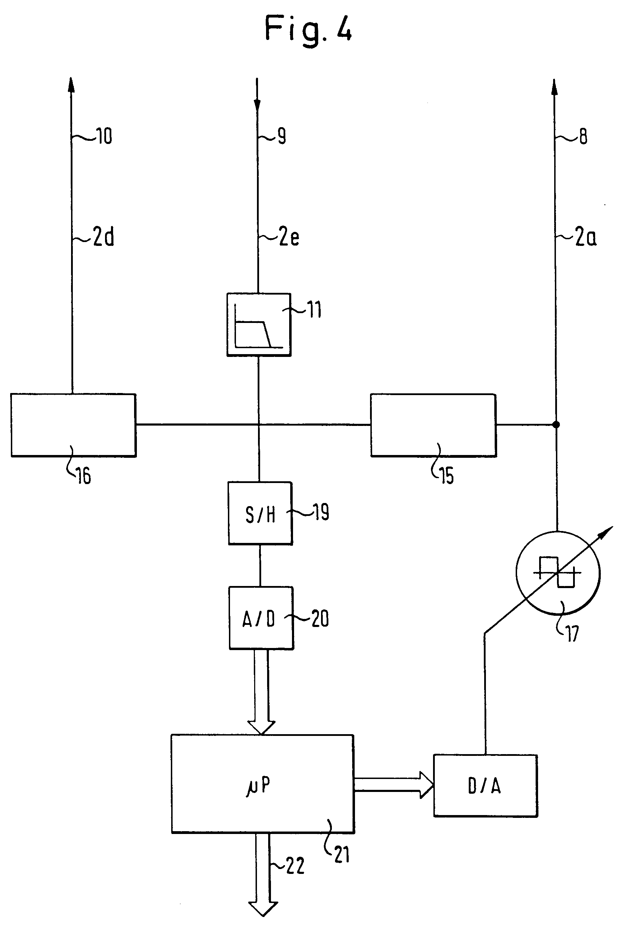

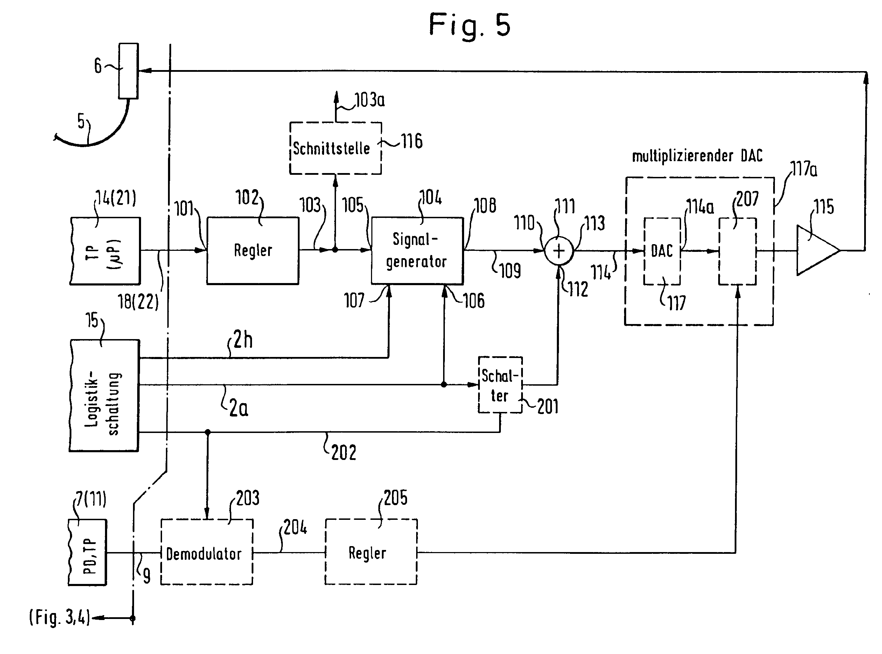

Die für eine solche Ansteuerung erforderliche Signalfolge in der Stromzuführung 10 der Lichtquelle 1 zeigt die Fig. 2d. Diese Signalfolge wird von einem Generator 16 (Fig. 3) erzeugt, der entsprechend von einer Logikschaltung 15 getriggert wird. Die sich ergebende Signalfolge des Auslesesignals des Photodetektors 7 auf der Leitung 9 zeigt die Fig. 2e. Dieses Signal gelangt zunächst auf ein Tiefpaßfilter 11 und wird über eine Kondensatorkopplung 12 vom Gleichspannungsanteil befreit und sodann einem Synchrondemodulator 13 zuge-

<div align="center">4</div>

führt, der auf die langsame Wechselfrequenz der Phasenlage der Pulse der Ein- und Austastung der Lichtquelle 1 synchronisiert ist. Zum besseren Verständnis ist das Signal nach der Kondensatorkopplung 12 in Fig. 2f und das Referenzsignal des Synchrondemodulators 13 in Fig. 2h dargestellt.

Ein Rechtecksignalgenerator 17 steuert den Phasenmodulator 6 (Fig. 1) über eine Leitung 8 mit dem Modulationssignal gemäß Fig. 2a an. Als Ausgangssignal des Synchrondemodulators 13 erhält man das Produkt aus den Signalen von Fig. 2f und 2h, nämlich die Signalfolge gemäß Fig. 2g. Dieses Signal wird über ein Tiefpaßfilter 14 geleitet und steht als drehratenproportionales Signal 18 am Ausgang des Synchrondemodulators 13 zur Verfügung.

Die jetzt gegebene relativ langsame (niederfrequente) Demodulation läßt sich mit einem vergleichsweise preiswerten Demodulatorbaustein erreichen, der bei den möglichen niedrigen Frequenzen sehr nullpunktstabil und linear arbeitet.

Um bei diesem Demodulationsverfahren keine Unsymmetrien zu erhalten, ist es erforderlich, daß sich beim Phasenwechsel der Lichtquellenein- und -austastung nur die Phasenlage, nicht aber die Signalform oder Signalhöhe (Lichtstärke der Lichtquelle 1, Lichtamplitude), ändert. Dieser Forderung kann durch bekannte Stabilisierungsmaßnahmen leicht erfüllt werden.

Der die Ein- und Ausschaltpulse für die Lichtquelle erzeugende Generator 16 arbeitet völlig unabhängig von der übrigen Elektronik; lediglich zur Synchronisation wird, wie in der Schaltung der Fig. 3 angegeben, ein entsprechendes Triggersignal von der Logikschaltung 15 bezogen.

Wegen der vergleichsweise niedrigen Demodulationsfrequenz sind nun auch digitale Demodulationsverfahren gut geeignet. Fig. 4 zeigt eine Demodulationsschaltung, die ebenfalls mit der Signalfolge gemäß Fig. 2a bis 2f betrieben werden kann.

Der Unterschied der Schaltung der Fig. 4 zu der nach Fig. 3 liegt darin, daß das in 11 tiefpaßgefilterte Signal über ein Abtast-Halte-Glied 19 einem Analog/Digital-Wandler 20 zugeführt und mittels eines Signalprozessors 21 verarbeitet wird. Der Signalprozessor 21 hat im Prinzip die gleiche Funktion wie der Synchron- oder Rechteckdemodulator 13; er kann aber auch zusätzliche Signale digital filtern und die Funktion der Logikschaltung 15, des Phasenmodulators 17 und des Generators 16 für die Lichtquellenansteuerung mit übernehmen. Der Vollständigkeit halber sei erwähnt, daß die Funktion des Signalprozessors 21 auch durch hartverdrahtete Logikbausteine realisiert werden kann. Beispielsweise kann ein richtungssteuerbarer Zähler (Vor-/Rückwärts-Zähler), der von einem A/D-Wandler 20 mit nur 1 Bit Auflösung (Komparator) und der Logikschaltung 15 gesteuert wird, den Demodulationsvorgang sowie zusätzlich einen Akkumulations- bzw. Integrationsvorgang durchführen. Der Signalprozessor 21 liefert ein digitales Ausgangssignal 22.

Gemäß dem in Fig. 5 gezeigten Ausführungsbeispiel der vorliegenden Erfindung wird das drehratenproportionale Signal 18 (vergl. Fig. 3) bzw. 22 (vergl. Fig. 4) an den Eingang 101 einer Regeleinrichtung 102 gelegt, die beispielsweise die Funktion eines PI-Reglers (Proportional-Integral) realisiert. Die Regelparameter bestimmen das dynamische Verhalten der Drehratenrückstellung bei geschlossener Regelschleife. Das Ausgangssignal 103 der Regeleinrichtung 102 steuert einen Signalgenerator 104 an dessen einem Eingang 105. Weitere Signaleingänge 106 und 107 des Signalgenerators 104 sind mit den Signalen gemäß den Fig. 2a bzw. 2h aus der Logikschaltung 15 beaufschlagt. Der Ausgang 108 des Signalgenerators 104 liefert im wesentlichen eine Rechteckschwingung 109, die die Frequenz des Signals nach Fig. 2a und eine Amplitude entsprechend dem Signal 103 (Reglerausgang) aufweist sowie entsprechend dem Zustand des Signals der Fig. 2h in der Phasenlage um 180° periodisch umgetastet wird, also je nach Zustand des Signals der Fig. 2h relativ zum Rechtecksignal der Fig. 2a in Phase oder gegenphasig liegt. Das Signal 109 wird an den Eingang 110 einer Summationseinrichtung 111 geführt, die an einem zweiten Eingang 112 durch das Modulationssignal gemäß Fig. 2a beaufschlagt ist. Am Ausgang 113 der Summationseinrichtung 111 erscheint ein Signal 114, das im wesentlichen proportional ist zur Summe der Signale 109 und nach Fig. 2a. Dieses Signal 114 gelangt über einen Verstärker 115 an den Phasenmodulator 6 und bewirkt dort eine optische Phasenverschiebung, die aus einem Modulationsanteil aufgrund des Signals nach Fig. 2a und erfindungsgemäß einem Rückstellanteil, herrührend vom Signal 109, besteht. Der letztere Signalanteil 109 wird über die Regeleinrichtung 102 derart gesteuert, daß die optische Wirkung der drehratenabhängigen Sagnac-Phasenverschiebung ausgeglichen wird und das Demodulatorausgangssignal 18 (Fig. 2g), das an den Eingang 101 der Regeleinrichtung 102 gelangt, im wesentlichen zu Null wird. Da die Amplitude des Rückstellsignals 109 dann ein direktes Maß der Sagnac-Phasenschiebung und damit für die zu messende Drehrate ist, ist auch die Amplitudensteuergröße 103 für den Signalgenerator 104 ein direktes Maß für die Drehrate. Vorzugsweise wird ein linearer Zusammenhang zwischen der Amplitudensteuergröße 103 und der Ausgangsamplitude des Signals 109 im Signalgenerator 104 zu realisieren sein, womit dann der Wert des Signals 103 ein lineares Maß für die Drehrate ist und damit auch den Sensorausgang darstellt, der direkt oder gegebenenfalls über eine Schnittstelle 116 als Drehratensignal 103a herausgeführt sein kann.

Die Funktionen der Regeleinrichtung 102, des Signalgenerators 104, der Summationseinrichtung 111 und der Schnittstelle 116 können jeweils ganz oder teilweise in analoger oder digitaler Schaltungstechnik realisiert sein, wobei an den Übergangsstellen A/D- bzw. D/A-Wandler vorzusehen sind. Digitale Funktionseinheiten können ganz oder teilweise auch im Signalprozessor 21 gemäß Fig. 4 mit realisiert werden. Beispielsweise können die Funktionen der Regeleinrichtung 102, des Signalgenerators 104, der Summationseinrichtung 111 und der Schnittstelle 116 durch digitale Signalverarbeitungseinrichtungen realisiert werden. Dann ist am Ausgang 113 der Summationseinrichtung 111 ein Digital/Analog-Wandler 117 (DAC) nachzuschalten, der das Digitalsignal 114 in ein entsprechendes Analogsignal 114a zur Versorgung des Phasenmodulators 6 wandelt. Durch ansonsten voll digitale Signalaufbereitung wird dann auch das Ausgangssignal 103 bzw. 103a in digitaler Form vorliegen.

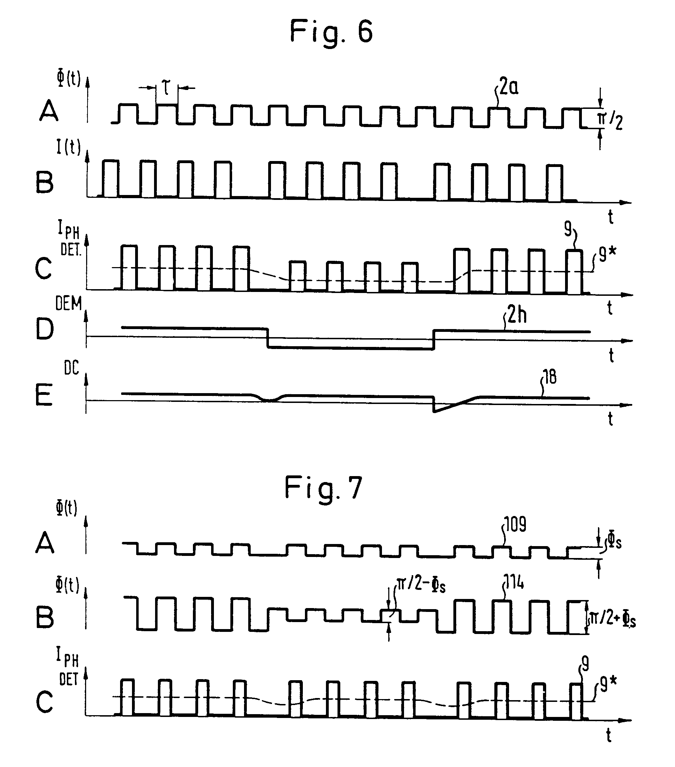

In Ergänzung der Darstellung der Signalverläufe nach Fig. 2 zeigt die Fig. 6 Signalverläufe bei Anwesenheit einer Drehrate, und zwar für die erfindungsgemäße Closed-Loop-Anordnung bei nicht vollständiger Sagnac-Phasenkompensation. Fig. 6A verdeutlicht wiederum das der Fig. 2a entsprechende Rechteckmodulationssignal bei einem im Phasenmodulator 6 wirksamen Phasenhub von $\pi/2$ Spitze-Spitze.

Das Lichtintensitätssignal bzw. das für die Lichtquelle 1 benötigte elektrische Ansteuersignal zeigt - entsprechend Fig. 2d - die Fig. 6B.

Ähnlich der Fig. 2e veranschaulicht die Fig. 6C das vom Photodetektor 7 gelieferte, der auftreffenden Lichtintensität entsprechende elektrische Ausgangssignal 9, das gegenüber dem Signal nach Fig. 6B um die Lichtlaufzeit $\tau$ verschoben ist und drehratenbedingt im Takt des Signals gemäß Fig. 2h in der Amplitude schwankt. Das mit Bezugshinweis 9∗ angegebene Signal gibt das im Tiefpaßfilter 11 gemittelte Signal 9 wieder.

Das Signal gemäß Fig. 6D entspricht dem Referenzsignal gemäß Fig. 2h für den Synchrondemodulator 13 bzw. für die Änderung der Schaltphase für die Ein- und Ausschaltung der Lichtquelle 1.

Die Fig. 6E gibt das im Tiefpaßfilter 14 gefilterte Demodulatorausgangssignal 18 wieder, das einen drehratenentsprechenden, von Null verschiedenen Mittelwert aufweist.

Im Schaltbild der Fig. 5 sind in gestrichelter Umrißlinie alternative bzw. ergänzende Ausführungsformen der erfindungsgemäßen Schaltungsanordnung gleichfalls dargestellt.

Bei einer ersten Ausführungsvariante wird das Rechteckmodulationssignal gemäß Fig. 2a bzw. 6A über eine Schalteinrichtung 201 mittels eines Umschaltsignals 202, dessen Wechselfrequenz der des Referenzsignals für den Synchrondemodulator 13 entsprechen kann und beispielsweise der Logikschaltung 15 entnommen wird, periodisch oder auch nichtperiodisch in der Amplitude um den Faktor 3 umgeschaltet, so daß die effektive optische Modulationsphasenschiebung im Phasenmodulator 6, die normalerweise eine Amplitude von $\pm\,\pi/4$ aufweist, zeitweise auf den Wert von $\pm\,3\pi/4$ erhöht wird.

Die Fig. 7 zeigt für diesen Fall die Signalverläufe bei Vorliegen einer Drehrate.

Fig. 7A verdeutlicht das Signal 109 am Ausgang des Signalgenerators 104 mit einer Amplitude entsprechend der drehratenbedingten Sagnac-Phase $\Phi_s$.

Fig. 7B zeigt das Signal 114 nach der Summiereinrichtung 111, das als Summe aus den Signalen gemäß Fig. 2a (bzw. Fig. 6A) und 109 gebildet ist und am Phasenmodulator 6 anliegt.

Fig. 7C veranschaulicht das Photodetektorsignal 9 bzw. das mit 9∗ bezeichnete gefilterte Signal, das den Mittelwert darstellt für den Fall, daß das Signal 109 genau die Kompensation der Sagnac-Phase $\Phi_s$ bewirkt. Die Demodulation des Signals 9∗ mit dem Referenzsignal gemäß Fig. 2h im Synchrondemodulator 13 liefert dann den Wert Null für das Signal 18, d. h. der Regelkreis ist im eingeschwungenen Zustand und die Amplitude von 109 entspricht einem direkten Maß für die Drehrate.

Für den Fall, daß der normale Modulationswert der Amplitude des Signals gemäß Fig. 6A nicht genau $\pm\,\pi/4$ beträgt, beispielsweise aufgrund von Verstärkungsfehlern im Signalgenerator 104, in der Summationseinrichtung 111 oder im Verstärker 115 bzw. im Phasenmodulator 6 wird der Intensitätswert 9 (Fig. 7C) am Photodetektor 7 im Takt des Umschaltsignals 202 schwanken.

Um hier eine Kompensation zu erreichen, kann über eine Synchrondemodulationseinrichtung 203 (vgl. Fig. 5), die das Photodetektorsignal 9 mit dem Umschaltsignal 202 als Referenz demoduliert, ein Signal 204 gewonnen werden, das dem Skalenfaktorfehler, also der Modulationshubabweichung vom Nennwert $\pm\,\pi/4$, im wesentlichen proportional ist. Dieses Signal 204 wird einem Regler 205 zugeführt, der nach bekannten regelungstechnischen Prinzipien ausgelegt ist und beispielsweise als sogenannter I- oder PI-Regler (Integral- bzw. Proportional-Integral-Regler) realisiert ist und an seinem Ausgang ein Steuersignal 206 erzeugt, das die Amplitude des Signals 114 bzw. im Falle einer in Digitaltechnik realisierten Schaltung das Signal 114 nach dem DAC 117 über ein Einstellglied 207 derart steuert, daß die effektive Modulationsamplitude entsprechend dem Zustand des Signals 202 genau $\pm\,\pi/4$ bzw. $\pm\,3\pi/4$ beträgt und damit die Intensitätsschwankungen im Photodetektorsignal 9 zum Verschwinden bringt, so daß das Ausgangssignal 204 des Demodulators 203 im wesentlichen zu Null wird.

Wie in Fig. 5 ebenfalls durch gestrichelte Blockumrandung dargestellt, kann die Funktion der Stelleinrichtung 207 zusammen mit der Funktion des DAC 117 in einem sogenannten multiplizierenden Digital/Analog-Wandler 117a realisiert werden, dessen Referenzeingang mit dem Steuersignal vom Regler 205 beaufschlagt wird. Der Ausgangswert dieses multiplizierenden DACs 117 ist im wesentlichen proportional zum Produkt der Werte der Signale 114 und 206. Möglich sind auch volldigitale Realisierungen, bei denen die Amplitudensteuerfunktion, die im wesentlichen einer Multiplikation des Steuersignals 206 mit dem Phasenmodulationssignal 114 entspricht, durch digitale Signalverarbeitungseinrichtungen realisiert wird.

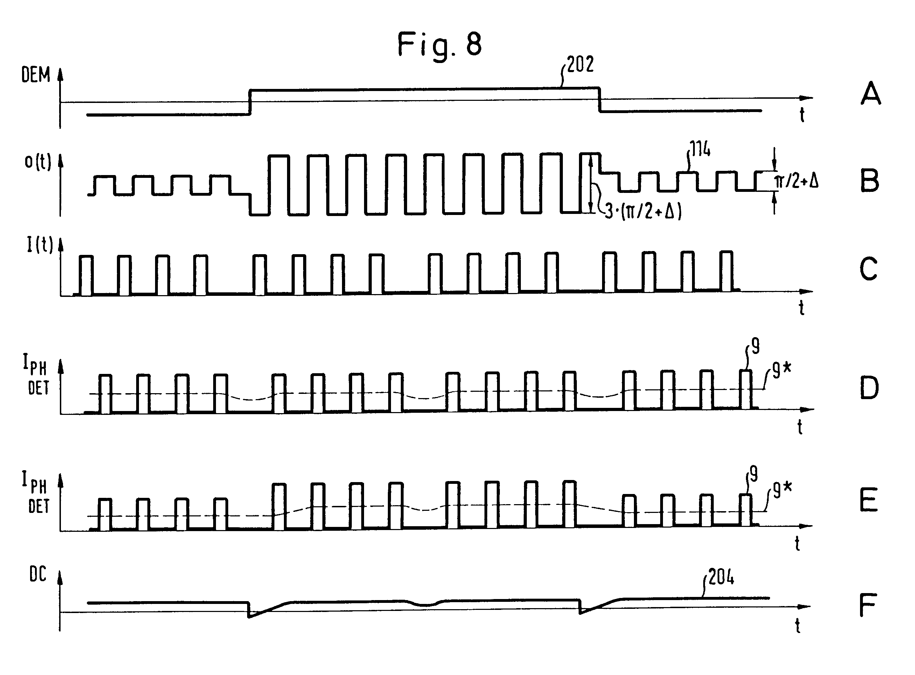

Die Fig. 8 zeigt die Signalverläufe bei einer Skalenfaktorregelung, wie sie mit Bezug auf die Ergänzungen der Fig. 5 beschrieben wurden. Zur Vereinfachung sei hier keine Drehrate angenommen.

Fig. 8A zeigt das Umschaltsignal 202, in dessen Takt das Signal 114 (Fig. 8B) um den Faktor 3 in der Amplitude umgeschaltet wird.

Fig. 8C verdeutlicht wiederum den Verlauf der Lichtintensität der getasteten Lichtquelle 1.

Für den Fall, daß der wirksame Phasenhub durch das Signal 114 (Fig. 8B) genau $\pm \pi/4$ bzw. $\pm 3\pi/4$ beträgt, d. h. bei korrektem Skalenfaktor ($\Delta = 0$), liefert der Photodetektor 7 das Signal 9 bzw. 9* nach Filterung gemäß Fig. 8D. Eine Demodulation des Signals 9* im Demodulator 203 mit dem Referenzsignal 202 liefert das Signal 204 (Fig. 8F) vom Wert Null, d. h. der Regler 205 wird die Amplitude des Signals 114 nicht ändern.

Für den Fall, daß die Amplitude des Signals 114 vom Nennwert abweicht, also $\pm(\pi/4 + \Delta)$ bzw. $\pm 3 \cdot (\pi/4 + \Delta)$ beträgt (vgl. wiederum Fig. 8B), zeigen die Signale 9 bzw. 9* den Verlauf nach Fig. 8E. Eine Demodulation des Signals 9* mit dem Referenzsignal 202 im Demodulator 203 liefert das Signal 204 (Fig. 8F) mit einem von Null verschiedenen Wert, der dann über den Regler 205 eine Korrektur der Amplitude des Signals 114 derart bewirkt, daß der Fehlerwert $\Delta$ des Signals 114 schließlich zu Null wird und die Signale 9 bzw. 9* den Verlauf gemäß Fig. 8D annehmen.

Die in den Fig. 6A, 7A, 7B und 8B verdeutlichten Phasenschiebungsverläufe sind bewußt ohne Nullbezugslinie gezeichnet, da der Mittelwert (DC-Anteil) der Phasenschiebungen beliebig (natürlich auch zu Null) gewählt werden kann, ohne die jeweilige Funktion zu beeinflussen.

Mit der Erfindung ergeben sich für Sagnac-Interferometer der genannten Art die folgenden besonderen Vorteile:

Die in der US-PS 4 705 399 bzw. der EP-A- 436 052 beschriebenen sogenannten Rampenrückstellverfahren benötigen selbst bei nur niedrigen Drehraten, also niedrigen Sagnac-Phasenschiebungen, wobei hier als "niedrig" Drehraten von wesentlich kleiner als $2\pi$ gemeint sind, einen Phasenhubaussteuerbereich des Phasenmodulators von $2\pi$ bzw. $3,5\pi$. Bei der hier beschriebenen Erfindung ist lediglich ein Aussteuerbereich von $0,5\pi$ bzw. $1,5\pi$ (letzteres bei Skalenfaktorregelung) zuzüglich der drehratenbedingten zusätzlichen Phasenschiebung erforderlich.

Dieser Vorteil kommt insbesondere für Kreisel niedriger Genauigkeit zum Tragen, die aus Kosten- und Volumengründen kleine Abmessungen und kurze Faserlängen aufweisen und dadurch auch bei den höchsten vorkommenden Drehraten nur niedrige Rückstellphasenhübe benötigen. Durch diese verminderte Aussteuerung sind an die Linearität, die Spannungsversorgung und die Spannungsanstiegsgeschwindigkeit der Versorgungseinrichtung für den Phasenmodulator sowie an den linearen Aussteuerbereich des Phasenmodulators 6 selbst geringe Anforderungen zu stellen.

Da Einrichtungen zur Rampensignalerzeugung entfallen, vermindert sich der Schaltungaufwand.

Gegenüber der in der EP-A- 400 197 beschriebenen Ausführungsform eines Drehratensensors in Open-Loop-Konfiguration ergeben sich mit der Erfindung als weitere besondere Vorteile:

- ein linearer Zusammenhang zwischen Drehrate und Ausgangssignal;
- ein hoher verarbeitbarer Drehratendynamikbereich;
- ein kleiner Aussteuerbereich am Photodetektor 6 und für die nachfolgenden Signalverarbeitungseinrichtungen;
- eine wesentlich verminderte Empfindlichkeit auf Parameterschwankungen (Verstärkungen, Lichtintensität usw.);
- die Möglichkeit, einfache Selbsttestverfahren zu implementieren, da Drehbewegungen durch elektrisch stimulierte Phasenverschiebungen simuliert und ausgewertet werden können.

**Patentansprüche**

1. Faseroptisches Sagnac-Interferometer zur Drehratenmessung, bei dem
   - ein von einer Lichtquelle (1) ausgehender Lichtstrahl, über eine Faserstrecke geleitet, einen ersten Richtkoppler (2) durchläuft, an dessen einem Ausgang ein Photodetektor (7) für das Auslesesignal (9) angeschlossen ist, und in einem zweiten Richtkoppler (4) in zwei Teillichtstrahlen aufgespalten wird, die in entgegengesetzter Richtung in eine Faserspule (5) eingestrahlt und durch einen Phasenmodulator (6) periodisch mit einem Signal moduliert werden, dessen Periode geradzahligen Vielfachen der Laufzeit (τ) des Lichts durch die Faserspule (5) entspricht,

- ein Schaltsignalgenerator (16) das Erregersignal der Lichtquelle (1) periodisch so tastet, daß während einer ersten Zeitspanne, die einem ganzzahligen Vielfachen der Periode des Phasenmodulationssignals entspricht, nur ein bestimmter erster Phasenabschnitt des periodischen Ausgangssignals des Interferometers zur weiteren Verarbeitung durch eine Demodulations- und Auswerteschaltung auftritt,

- eine Logikschaltung (15) den Schaltsignalgenerator (16) so triggert, daß nach der ersten Zeitspanne während einer zweiten Zeitspanne oder gegebenenfalls während aufeinanderfolgender weiterer Zeitspannen, die jeweils einem ganzzahligen Vielfachen der Periode des Phasenmodulationssignals entsprechen, nur ein zweiter bzw. aufeinanderfolgend jeweils nur ein weiterer Phasenabschnitt des periodischen Auslesesignals (9) des Interferometers auftritt, so daß nach einer der Anzahl der einzelnen erfaßten Phasenabschnitte entsprechenden Mehrzahl von Tastfolgewechseln eine ganze, aus der Folge der erfaßten Phasenabschnitte zusammengesetzte Periode des Auslesesignals erfaßt ist und anschließend in analoger Weise fortlaufend weitere Perioden, deren Dauer entsprechend der Anzahl der Tastpulse pro Phasenabschnitt wesentlich länger ist als die Periode des Phasenmodulationssignals, und bei dem

- die Auslesesignale der durch den Tastvorgang erfaßten Phasenabschnitte synchron zu den Abtast-Zeitspannen demoduliert werden, wobei

- der Phasenmodulator (6) durch einen Modulationssignalgenerator angesteuert ist, der

-- eine die demodulierten Auslesesignale (18; 22) aufnehmende rückstellende Regeleinrichtung (102),

-- einen vom Ausgangssignal der Regeleinrichtung (102) beaufschlagten Signalgenerator (104), der ein mit der Frequenz des periodischen Modulationssignals synchronisiertes Rechtecksignal (109) mit einer im Takte des Triggersignals der Logikschaltung (15) um 180° wechselnden Rechteckphasenlage liefert, dessen Amplitude dem Ausgangssignal der Regeleinrichtung (102) folgt und

-- eine Summationseinrichtung (111) umfaßt, die an einem ersten Eingang (110) durch den Signalgeneratorausgang (109) und an einem zweiten Eingang (112) durch das Modulationssignal beaufschlagt ist, und wobei

- der verstärkte Summenausgang (114) der Summiereinrichtung (111) den Phasenmodulator (6) als drehratenkompensierendes Modulationssignal beaufschlagt.

2.    Faseroptisches Sagnac-Interferometer nach Anspruch 1, **dadurch gekennzeichnet**, daß die Regeleinrichtung (102) einen Proportional-Integral-Regler enthält, der so eingestellt ist, daß die Amplitudensteuergröße für den Signalgenerator (104) ein direktes Maß für die Drehrate ist, die über eine an den Reglerausgang angeschlossene Schnittstelle (116) auslesbar ist.

3.    Faseroptisches Sagnac-Interferometer nach Anspruch 1 oder 2, **gekennzeichnet durch** eine Schalteranordnung (201), die das den zweiten Eingang (112) der Summiereinrichtung (111) beaufschlagende Modulationssignal im Wechsel eines von der Logikschaltung (15) gelieferten Steuersignals in der Amplitude von ±π/4 auf ±3π/4 umschaltet.

4.    Faseroptisches Sagnac-Interferometer nach Anspruch 3, **gekennzeichnet durch** eine Skalenfaktorregelschaltung mit einem durch das Steuersignal von der Logikschaltung (15) synchronisierten Synchrondemodulator (203), dessen Ausgangssignal eine weitere Regeleinrichtung (205) speist, die Abweichungen der Amplitude von den umschaltbaren Sollwerten ±π/4 bzw. ±3π/4 im Ausgangssignal der Summiereinrichtung kompensiert.

## Claims

1.    A fiber optic Sagnac interferometer for measuring a rate of rotation, in which

- a light beam emanating from a light source (1), conducted via a fiber section, passes through a first directional coupler (2) to the output of which a photodetector (7) for the readout signal (9) is connected, and in a second directional coupler (4) is split up into two partial light beams which are irradiated in opposite directions into a fiber coil (5) and are periodically modulated by a phase modulator (6) with a signal the period of which corresponds to even-numbered multiples of the transit time (τ) of the light through the fiber coil (5),

- a switching signal generator (16) samples the excitation signal of the light source (1) periodically so that during a first time interval corresponding to an integral multiple of the period of the phase modulation signal, only a specified first phase portion of the periodic output signal of the interferometer appears for further processing by a demodulation and evaluation circuit,

- a logic circuit (15) triggers the switching signal generator (16) so that after the first time interval during a second time interval or possibly during successive further time intervals representative each of an integer multiple of the period of the phase modulation signal, only a second or in succession only each one further phase portion of the periodical readout signal (9) of the interferometer appears so that after a plurality of sampling sequence changes corresponding to the number of individual detected phase portions, a whole period composed of the sequence of the detected phase portions of the readout signal is detected, and subsequently in a similar manner continuously further periods, the duration of which is substantially longer than the period of the phase modulation signal depending on the number of sampling pulses per phase portion, and in which

- the readout signals of the phase portions detected by the sampling process are demodulated synchronously with the sampling time intervals,

  wherein

- the phase modulator (6) is driven by a modulation signal generator which

  -- comprises a resetting controlling device (102) receiving the demodulated readout signals (18; 22),

  -- a signal generator (104) which is acted upon by the output signal of the controlling device (102) and which supplies a rectangular signal (109) synchronized with the frequency of the periodic modulation signal, with a rectangular phase position alternating in the cycle of the trigger signal of the logic circuit (15) by 180°, the amplitude of which rectangular signal follows the output signal of the controlling device (102), and

  -- a summation device (111) which is acted upon at a first input (110) by the signal generator output (109) and at a second input (112) by the modulation signal,

  and wherein

- the amplified sum output (114) of the summation device (111) acts upon the phase modulator (6) as a modulation signal compensating with respect to the rate of rotation.

2. The fiber optic Sagnac interferometer as set forth in claim 1, characterized in that the controlling device (102) includes a proportional integral controller which is adjusted so that the amplitude control variable for the signal generator (104) is a direct measure of the rate of rotation which can be read out through an interface (116) connected to the controller output.

3. The fiber optic Sagnac interferometer as set forth in claim 1 or claim 2 characterized by a switch arrangement (201) for switching over the modulation signal acting upon the second input (112) of the summation device (111) in alteration with a control signal supplied by the logic circuit (15) in the amplitude of $\pm \pi/4$ to $\pm 3 \pi/4$.

4. The fiber optic Sagnac interferometer as set forth in claim 3 characterized by a scale factor controlling circuit having a synchronous demodulator (203) which is synchronized by the control signal from the logic cirucit (15) and the output signal of which is fed to a further controlling device (205) which compensates deviations of the amplitude from the switchable target values $\pm \pi/4$ and $\pm 3 \pi/4$ in the output signal of the summation device.

## Revendications

1. Interféromètre de Sagnac à fibre optique pour la mesure de la vitesse de rotation dans lequel

- deux faisceaux lumineux émis par une source de lumière (1) et transmis par une section de fibre, parcourent un premier coupleur directif (2) dont l'une des sorties est reliée à un photodétecteur (7) pour le signal de sortie (9), et sont divisés dans un second coupleur directif (4) en deux faisceaux lumineux partiels qui sont injectés dans des directions opposées dans un enroulement de fibre (5) et modulés périodiquement par un modulateur de phase (6) avec un signal dont la période correspond à un multiple entier du temps de propagation ($\tau$) de la lumière par l'enroulement de fibre (5),

- un générateur de signaux de commutation (16) modulant périodiquement le signal d'excitation de la source de lumière (1) de telle façon que dans un premier intervalle de temps correspondant à un multiple entier de la période du signal de modulation de phase, seule une première section de phase déterminée du signal de sortie périodique de l'interféromètre est disponible pour le traitement ultérieur par un circuit de démodulation et d'interprétation,
- un circuit logique (15) déclenche le générateur de signaux de commutation (16) de telle façon que, après le premier intervalle de temps, pendant un second intervalle de temps ou éventuellement pendant d'autres intervalles de temps consécutifs qui correspondent à chaque fois à un multiple entier de la période du signal de modulation de phase, seule apparaît une seconde section de phase ou respectivement en succession une autre section de phase du signal de sortie (9) périodique de l'interféromètre, de telle sorte que, après une multiplicité d'alternances de séquences de modulation correspondant au nombre des différentes sections de phase détectées, on détermine une période entière du signal de sortie composée de la séquence des sections de phase détectées et ensuite, en fonction du nombre des impulsions de modulation par section de phase, des périodes supplémentaires dont la durée est beaucoup plus longue que celle de la période du signal de modulation de phases, et dans lequel
- les signaux de sortie des sections de phase déterminées par le processus de modulation sont démodulés en synchronisme avec les intervalles de temps de balayage,
- le modulateur de phase (6) étant commandé par un générateur de signaux de modulation qui comprend
-- un dispositif -de réglage (102) avec remise à l'état initial recevant les signaux de sortie (18; 22),
-- un générateur de signaux (104) sollicité par le signal de sortie du dispositif de réglage (102), qui fournit un signal rectangulaire (109) synchronisé avec la fréquence du signal de modulation périodique, avec une relation de phase rectangulaire changeant de 180° au rythme du signal de déclenchement du circuit logique (15), dont l'amplitude suit celle du signal de sortie du dispositif de réglage (102), et
-- un dispositif d'addition (111) dont une première entrée (110) est reliée à la sortie du générateur de signaux (109) et dont une seconde entrée (112) reçoit le signal de modulation, et
- la sortie de totalisation amplifiée (114) du dispositif d'addition (111) est transmise au modulateur de phase (6) en tant que signal de modulation qui compense la vitesse de rotation.

2. Interféromètre de Sagnac à fibre optique selon la revendication 1, caractérisé en ce que le dispositif de réglage (102) comprend un régulateur proportionnel intégral qui est réglé de telle façon que la valeur de commande d'amplitude pour le générateur de signaux (104) est un critère direct pour la vitesse de rotation qui peut être sortie par l'intermédiaire d'une interface (116) reliée à la sortie du régulateur.

3. Interféromètre de Sagnac à fibre optique selon l'une des revendications 1 ou 2, caractérisé en ce qu'il comprend un système de commutation (201) qui commute le signal de modulation transmis à la seconde entrée (112) du dispositif d'addition (111), en alternance avec un signal de commande fourni par le circuit logique (15), de l'amplitude de $\pm \pi/4$ à $\pm 3\pi/4$.

4. Interféromètre de Sagnac à fibre optique selon la revendication 3, caractérisé en ce qu'il comprend un circuit de réglage du facteur d'échelle avec un démodulateur synchrone (203) synchronisé par le signal de commande provenant du circuit logique (15), dont le signal de sortie alimente un autre dispositif de réglage (205) qui compense des écarts de l'amplitude par rapport aux valeurs de consigne commutables $\pm \pi/4$ et respectivement $\pm \pi/4$ dans le signal de sortie du dispositif d'addition.

Fig. 1

# Fig. 2a

$\Phi(t)$

$\tau$

# Fig. 2b

$\Delta\Phi = \Phi(t) - \Phi(t-\tau)$

# Fig. 2c

$I(t)$

$I^+$ $I^-$ $I^+$ $I^-$ $I^+$ $I^-$ $I^+$

# Fig. 2d

$i_{Lichtquelle}$

$t_p$

$\tau$

Fig. 2e

I(t)

I⁺  I⁻  I⁺  I⁻  I⁺

Fig. 2f

Fig. 2g

Fig. 2h

Ref.-Signal für Demod. 13

EP 0 483 501 B1

# Fig. 3

14

EP 0 483 501 B1

# Fig. 4

15

Fig. 5

EP 0 483 501 B1

Fig. 6

Fig. 7

17

Fig. 8